# EUROPÄISCHE PATENTSCHRIFT

(11) **EP 1 565 336 B1**
(45) Veröffentlichungstag und Bekanntmachung des Hinweises auf die Patenterteilung: **27.06.2012**
(21) Anmeldenummer: 03779705.7
(22) Anmeldetag: 18.11.2003
(51) Int. Cl.: B60J 7/16

(54) **KRAFTFAHRZEUG**
MOTOR VEHICLE
AUTOMOBILE

(30) Priorität: 21.11.2002 DE 10254365
(43) Veröffentlichungstag der Anmeldung: 24.08.2005
(73) Patentinhaber: Wilhelm Karmann GmbH, 49084 Osnabrück (DE)
(72) Erfinder: BROCKHOFF, Franz-Ulrich, D-49565 Bramsche (DE)
(74) Vertreter: Kronthaler, Schmidt & Coll.
(86) Internationale Anmeldenummer: PCT/DE2003/003816
(87) Internationale Veröffentlichungsnummer: WO 2004/045881

(56) Entgegenhaltungen:
- DE-A- 3 930 343
- US-A1- 2002 105 205
- PATENT ABSTRACTS OF JAPAN Bd. 0101, Nr. 15 (M-474), 30. April 1986 (1986-04-30) -& JP 60 244620 A (TAKASHI ADACHI), 4. Dezember 1985 (1985-12-04)

## Beschreibung

Die Erfindung betrifft ein Kraftfahrzeug mit einem Dach, das zumindest einen insgesamt zu seiner Öffnung beweglichen Teil aufweist, nach dem Oberbegriff des Anspruchs 1.

Die DE 198 51 231 A1 zeigt ein Fahrzeug mit einem Schiebedach, das zu seiner Öffnung in Führungen eines hinteren Dachteils nach hinten verschiebbar ist. Diese Verschiebung ist erst möglich nach Verlagerung einer im geschlossenen Zustand in den Führungen gehaltenen Heckscheibe in einen Aufnahmeraum heckwärts und unterhalb ihrer geschlossenen Stellung. Damit geht eine erhebliche Einschränkung des zur Verfügung stehenden Gepäckraums einher. Zudem ist dadurch die Öffnungsbewegung des Schiebedachs verlangsamt, da dieses erst nach Verlagern der Heckscheibe nach hinten verschoben werden kann. Nach der heckwärtigen Verschiebung des Schiebedachs sind die seitlichen Rahmenabschnitte des Bereiches, in dem das Schiebedach in geschlossener Stellung gelegen hat, durch Einklappen und Verschieben unter die rückwärtigen C-Säulen optisch entfernbar. Die Rahmenabschnitte sind daher mehrteilig aufgebaut und können in sich eingefaltet werden, was jedoch einerseits den Fertigungsaufwand erhöht und andererseits die Stabilität der Rahmenabschnitte schwächt. Um das Schiebedach in eine horizontale Stellung ablegen zu können, ist nach dessen Verschieben zudem noch eine Schwenkbewegung erforderlich, was die Öffnungszeit weiter verlängert und den mechanischen Aufwand für eine derartiges Fahrzeug vergrößert.

Aus der DE 643 381 ist ein Fahrzeugverdeck mit einer sich in Fahrzeuglängsrichtung vorne anschließenden Verdeckverlängerung bekannt, welche über Führungseinrichtungen in eine Position unterhalb des Verdecks translatorisch verlagerbar ist. Die Verdeckverlängerung weist einen Hauptteil und seitlich daran angelenkte Seitenteile auf, welche gegenüber dem Hauptteil über eine Schwenkachse nach unten innen schwenkbar sind, so dass die Seitenteile an der Unterseite der Verlängerung anliegen.

Der Erfindung liegt das Problem zugrunde, ein Kraftfahrzeug mit einem Dach, das zumindest einen insgesamt zwischen einer Offen- und einer Schließstellung beweglichen vorderen Dachteil aufweist, zu schaffen, wobei eine Öffnungszeit für den vorderen, beweglichen Dachteil verringert ist.

Die Erfindung löst dieses Problem durch ein Kraftfahrzeug mit den Merkmalen des Anspruchs 1. Hinsichtlich vorteilhafter Ausgestaltungen der Erfindung wird auf die weiteren Ansprüche 2 bis 13 verwiesen.

Bei einer erfindungsgemäßen Ausbildung ist sichergestellt, daß der bewegliche Dachteil zu seiner Öffnung nicht Führungen des hinteren Dachteils verwenden muß. Der Dachteil kann daher auch ohne vorherige Verlagerung einer Heckscheibe geöffnet werden. Damit ist die Öffnungszeit für den Dachteil verringert und die Bewegungsmechanik vereinfacht. Insbesondere kann bei einem Finnenverdeck eine Heckscheibe stehenbleiben, die Bewegungsmechanik kann in den stehenbleibenden seitlichen Finnen des hinteren Dachteils optisch unauffällig geführt sein.

Bei einem derartigen Finnendach kann der bewegliche Dachteil, auch wenn er in Normalbreite die volle Breite zwischen Seitenscheiben einnimmt, durch Einfalten der Seitenbereiche zwischen den Finnen abgelegt werden.

In der erfindungsgemäßen Ausbildung ist der Aufwand für ein solches Fahrzeug erheblich vermindert. Die seitlichen Bereiche, etwa Rahmenteile, können durch einfache Einwärtsverlagerung gegenüber dem mittleren Bereich in die die Breite des Dachteils vermindernde Stellung gebracht werden, ohne daß ein Zusammenfalten der verlagerten Bereiche in sich erforderlich wäre. Wenn vorteilhaft der bewegliche Dachteil in einen mittleren und zwei seitliche Bereiche geteilt ist, können die Seitenbereiche beispielsweise einfach auf dem mittleren Bereich liegend mitbewegt werden. Eine sehr einfach zu realisierende Lösung sieht hierbei ein Einschwenken der Seitenbereiche gegenüber dem mittleren Bereich vor.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: eine schematische, im vorderen Bereich abgebrochene Perspektivische Gesamtansicht eines ersten erfindungsgemäßen Kraftfahrzeugs bei geschlossenem Dach in perspektivischer Ansicht, wobei das Dach als sog. Finnendach ausgebildet ist,
- Fig. 2: eine ähnliche Ansicht wie Figur 1 mit gegenüber dem mittleren Bereich aufgeschwenkten Außenbereichen des vorderen Dachteils,
- Fig. 3: eine ähnliche Ansicht wie Figur 2 bei aufgeschwenktem Rahmen des hinteren Dachteils während der Öffnungsbewegung des in verschmälerter Breite befindlichen vorderen Dachteils,
- Fig. 4: eine ähnliche Ansicht wie Fig. 3 bei vollständig abgelegtem beweglichem Dachteil und geschlossenem Schwenkrahmen des hinteren Dachteils,
- Fig. 5: eine ähnliche Ansicht wie Fig. 3 eines alternativen hinteren Dachteils, das lediglich aufschwenkbare Längsrahmenteile ohne ein verbindendes Querrahmenteil umfaßt,
- Fig. 6: eine ähnliche Ansicht wie Fig. 5 eines weiteren alternativen hinteren Dachteils, das mitsamt einer in geschlossener Stellung schräg liegenden Heckscheibe aufschwenkbar ist,

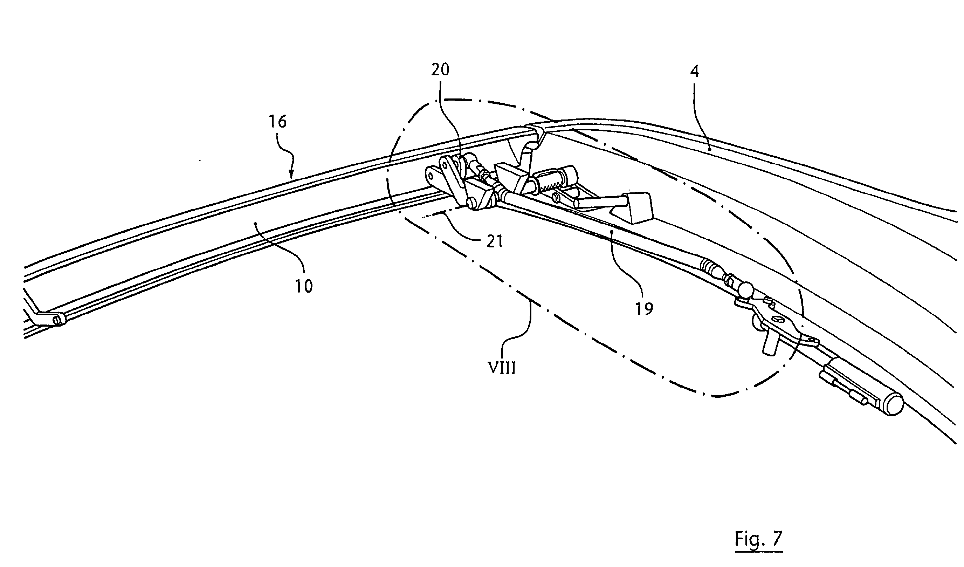

- Fig. 7: eine Detailansicht auf den Schwenkmechanismus für die Außenbereiche des vorderen Dachteils bei deren Stellung in Normalbreite des Dachteils, etwa aus Richtung des Pfeils VII in Fig. 1,
- Fig. 8: das Detail VIII in Fig. 7,
- Fig. 9: eine ähnliche Ansicht wie Fig. 8 während des beginnenden Aufschwenkens der Außenbereiche,
- Fig. 10: eine ähnliche Ansicht wie Fig. 9 bei weiter fortschreitendem Aufschwenken der Außenbereiche,

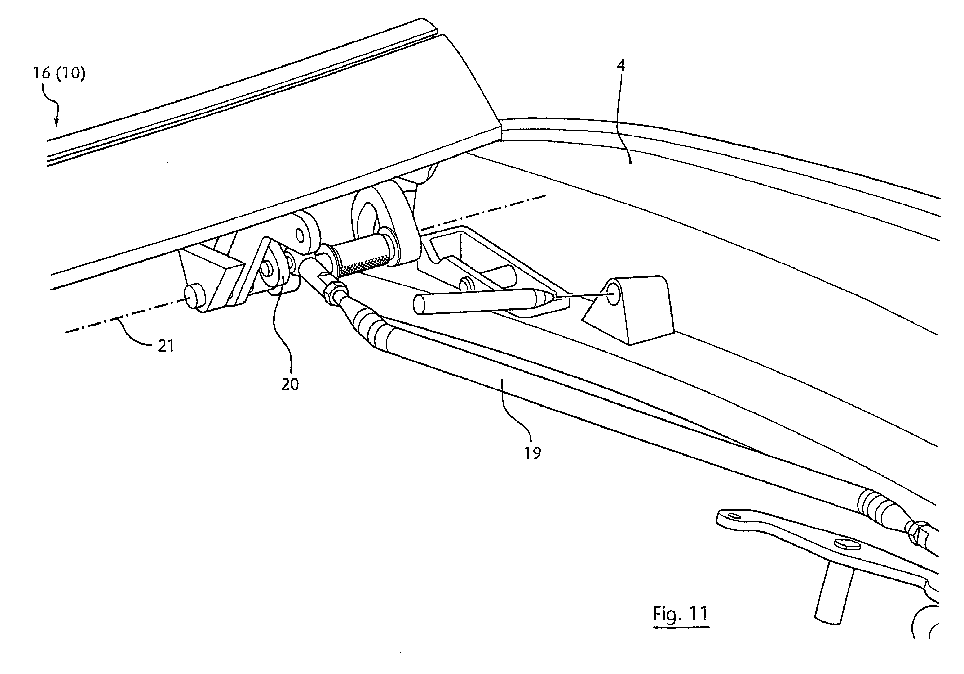

- Fig. 11: eine ähnliche Ansicht wie Fig. 10 während der heckwärtigen Verlagerung des beweglichen Dachteils,

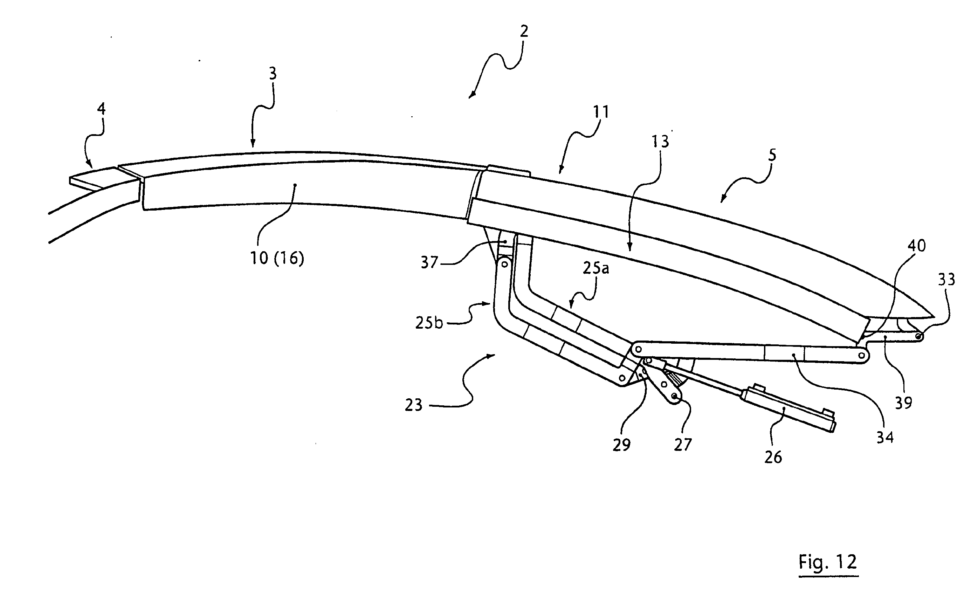

- Fig. 12: das Dach in Stellung nach Fig. 1 in schematischer Seitenansicht,

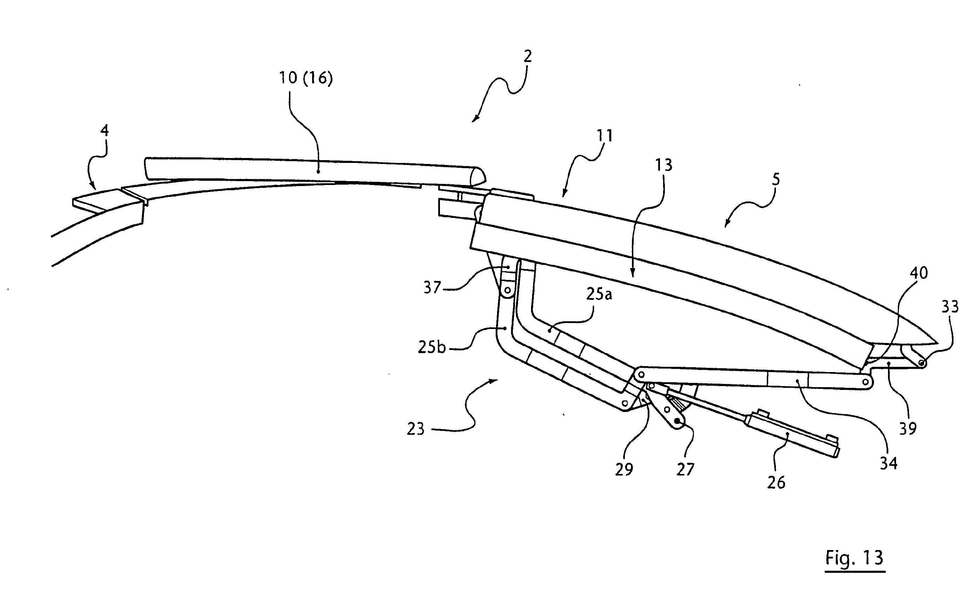

- Fig. 13: das Dach in Stellung nach Fig. 2 in schematischer Seitenansicht,

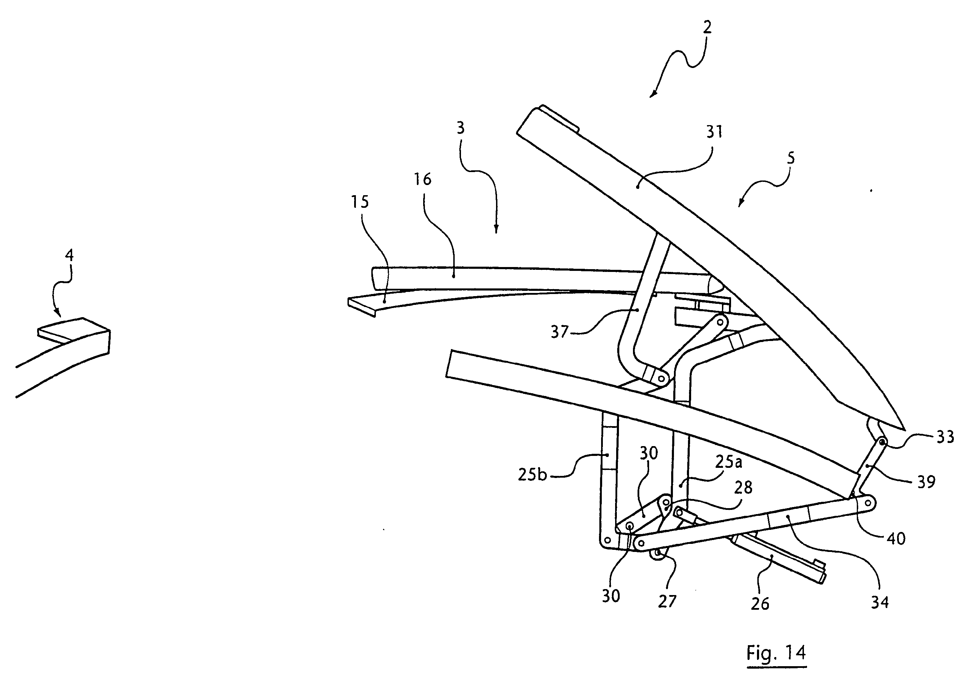

- Fig. 14: das Dach in Stellung nach Fig. 3 in schematischer Seitenansicht,

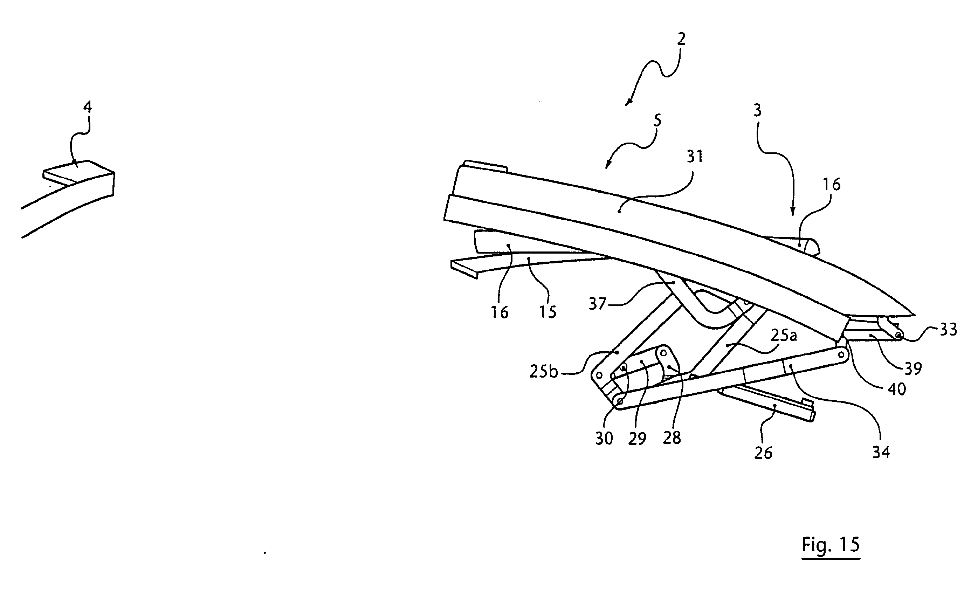

- Fig. 15: das Dach etwa in Stellung nach Fig. 4 in schematischer Seitenansicht.

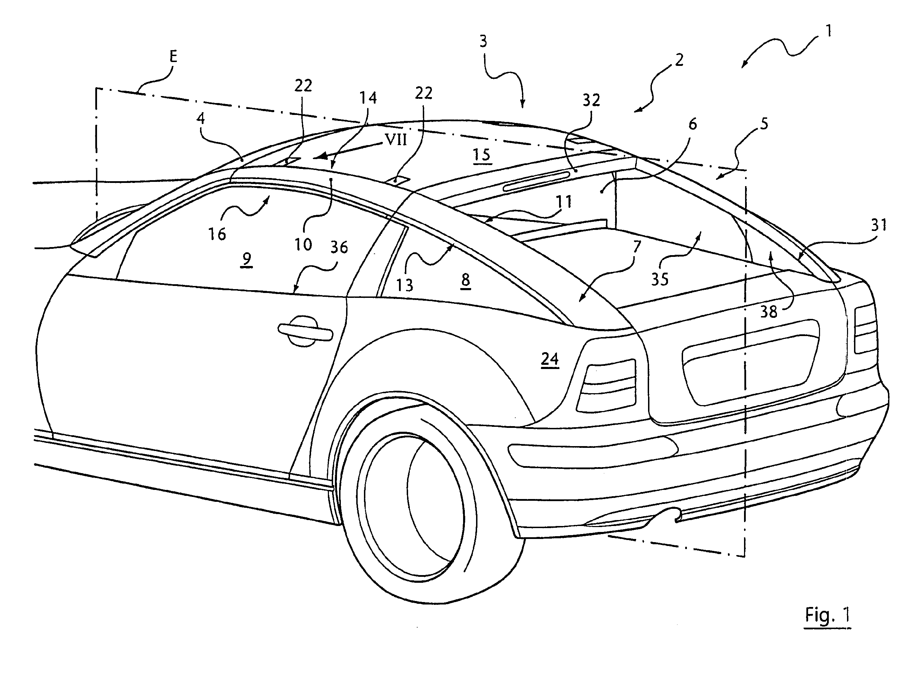

Das u. a. in den Figuren 1 bis 4 dargestellte erste Ausführungsbeispiel eines erfindungsgemäßen Kraftfahrzeugs 1 ist mit einem Dach 2 versehen, das zumindest einen öffnungsfähigen vorderen Dachteil 3 aufweist. Dieser vordere Dachteil 3 erstreckt sich von einem Windschutzscheibenrahmen 4 in Fahrzeuglängs-richtung zu einem hinteren Dachteil 5, der unter anderem eine hier im wesentlichen vertikal stehende Heckscheibe 6 umfaßt. Der vordere, bewegliche Dachteil 3 muß dabei nicht, wie hier gezeigt, unmittelbar an den Windschutzscheibenrahmen 4 anschließen. Das Dach 2 ist als sogenanntes Finnendach ausgebildet, weist also neben der relativ weit vorne angeordneten Heckscheibe 6 seitlich heckwärts laufende Spitzen 7 auf, die häufig auch als Finnen bezeichnet werden und beispielsweise außenseitig mit weiteren Seitenscheiben 8 versehen sein können. Die Heckscheibe 6 kann versenkbar sein.

Der bewegliche Dachteil 3 liegt bei geschlossenem Dach 2 im wesentlichen horizontal; er erstreckt sich im Ausführungsbeispiel über die gesamte Innenraumbreite und steht im geschlossenen Zustand in Kontakt mit Oberkanten von vorzugsweise versenkbaren Seitenscheiben 9.

Dieser Kontakt wird durch Abschnitte 10 von insgesamt mit 11 bezeichneten Rahmenteilen hergestellt. Die Abschnitte 10 können über Riegelzungen oder andere formschlüssige Verbindungs-elemente, etwa von oben eingreifende Hakenteile, am Windschutzscheibenrahmen 4 und an den C-Säulen 13 des hinteren Dachteils 5 sicherbar sein. Die Abschnitte 10 sind weiterhin an Trennfugen 14 mit einem mittleren Bereich 15 des vorderen Dachteils 3 verbunden, wobei diese Verbindung beweglich ist und gleichzeitig mit der Bewegung die Verriegelung des Dachteils 3 mit dem Windschutzscheibenrahmen 4 und der C-Säule 13 des hinteren Dachteils 5 aufgehoben wird.

Der bewegliche Dachteil 3 kann insgesamt sowohl durch mehrere starre Plattenkörper als auch von Rahmenkonstruktionen gebildet sein, die von einem flexiblen Bezug überspannt sind.

Im Ausführungsbeispiel verlaufen die Trennfugen 14 in Fahrzeuglängsrichtung. Sie könnten auch leicht schräg hierzu verlaufen. Auch ist es möglich, daß bezüglich einer vertikalen Längsmittelebene E seitlich außen liegende Bereiche 16 des beweglichen Dachteils 3 nicht allein durch die Rahmenabschnitte 10 gebildet sind, sondern einen breiteren Anteil des Dachteils 3 einnehmen. Eine Anordnung der Trennfugen 14 im Nahbereich der seitlichen Außenkanten mit einem Abstand von weniger als 20 Zentimetern ist vorteilhaft, um die einwärts verlagerbaren Außenbereiche 16 nicht zu schwer werden zu lassen.

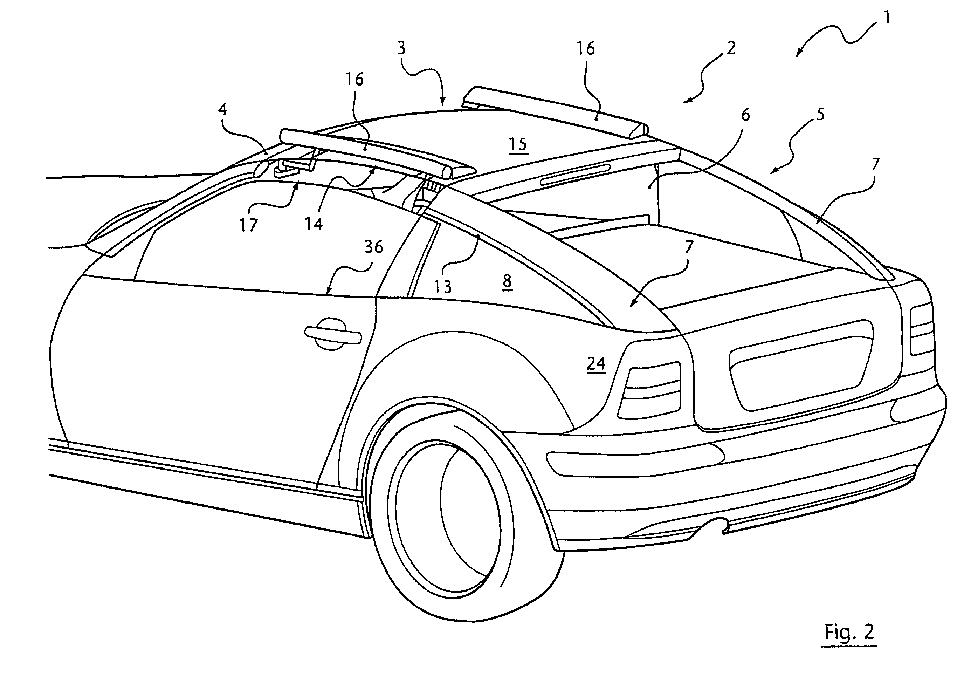

In jedem Fall sind die außen liegenden Bereiche 16 zwischen einer Normalstellung, in der sie fluchtend zum mittleren Bereich 15 liegen und in der der Dachteil 3 seine volle normale Breite aufweist (Fig. 1), und einer gegenüber dem mittleren Bereich einwärts verlagerten Stellung (Fig. 2) beweglich, in der der vordere Dachteil 3 verschmälert ist.

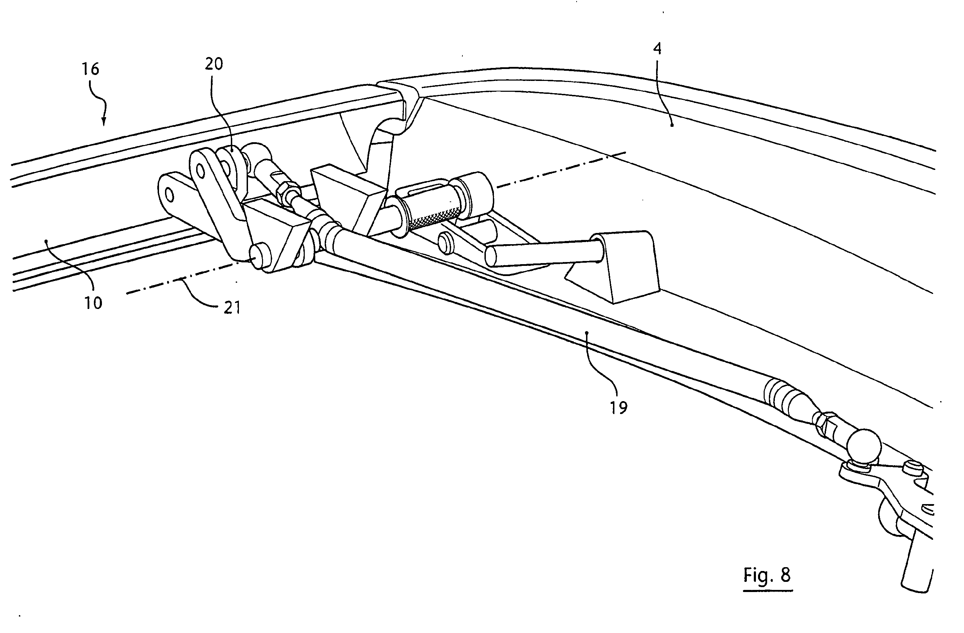

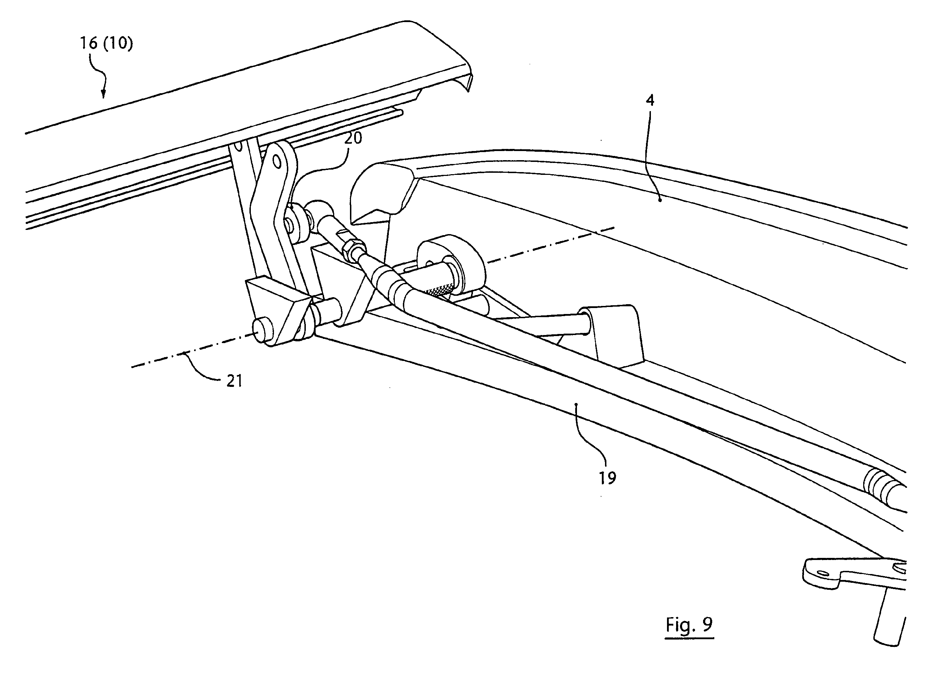

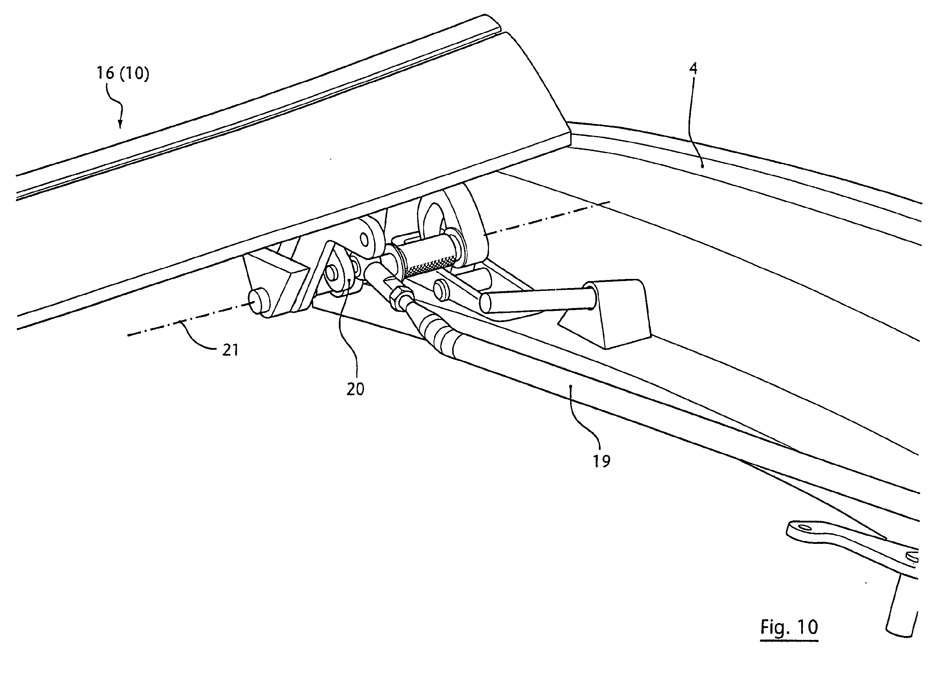

Wie im Detail in den Figuren 8 bis 10 dargestellt ist, ist die Verlagerung hier eine Schwenkverlagerung um etwa 90° und durch pro Fahrzeugseite zwei Mehrgelenke 17 bewirkt. Auch einfache Schwenkscharniere können Verwendung finden.

Die Mehrgelenke 17 sind hier jeweils von einem zentralen Betätigungsorgan 18, das manuell oder motorisch betreibbar sein kann, über Schubstangen 19 zu bewegen. Diese greifen an Hebeln 20 an, die ein bezüglich der Längsachsen 21 wirkendes Drehmoment aufbringen. Durch das Vorsehen von Mehrgelenken 17 schwenken die Außenbereiche 16, hier gebildet von den Rahmenabschnitten 10, nicht nur ein, sondern werden gleichzeitig dabei angehoben. Es kann vorgesehen sein, daß dem mittleren Bereich 15 an den Mehrgelenken 17 verlagerbare Verkleidungsklappen 22 zugeordnet sind, die den Durchtritt der Hebel 20 durch den mittleren Bereich 15 in verschmälerter Stellung des Dachteils 3 ermöglichen. Bei Verwendung einfacher Schwenkscharniere sind derartige Verkleidungen 22 entbehrlich. Neben dem hier gezeigten Einschwenken der Außenbereiche 16 sind prinzipiell auch andere Verlagerungen denkbar, etwa auch ein paralleles Einfahren der Außenbereiche 16 in translatorischer Bewegung. Beim Einschwenken liegen die Außenbereiche 16 in verschmälernder Stellung um 90° verschwenkt auf dem mittleren Bereich 15.

In dieser verschmälerten Stellung sind die seitlichen Rahmenteile 11 zwischen den A-Säulen des Windschutzscheibenrahmens 4 und den C-Säulen 13 unterbrochen, der vordere Dachteil 3 kann in dieser verschmälerten Stellung heckwärts zwischen die Spitzen 7 des Finnendachs 2 geöffnet werden.

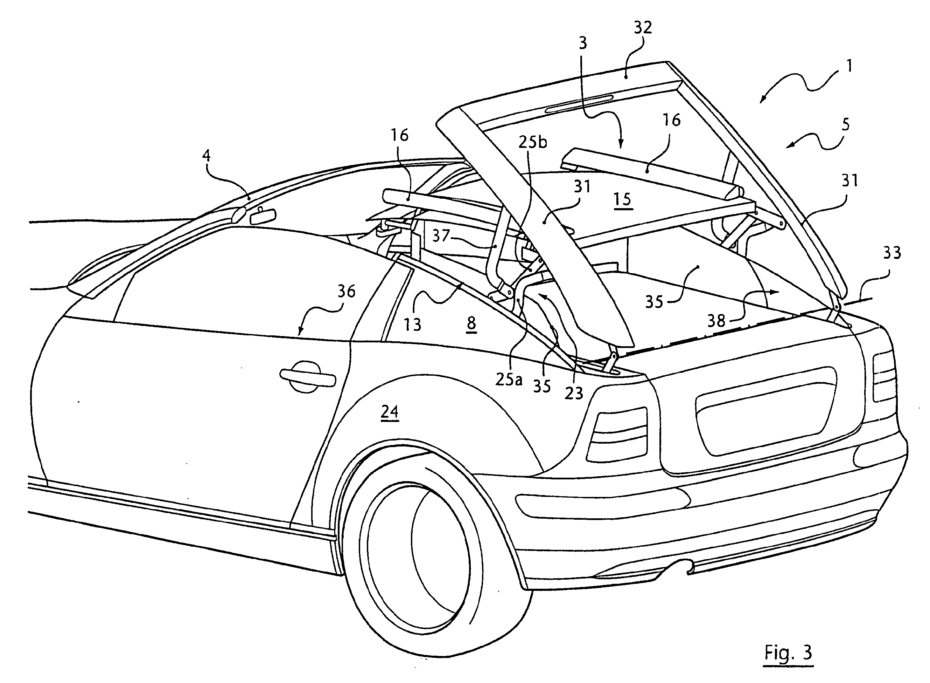

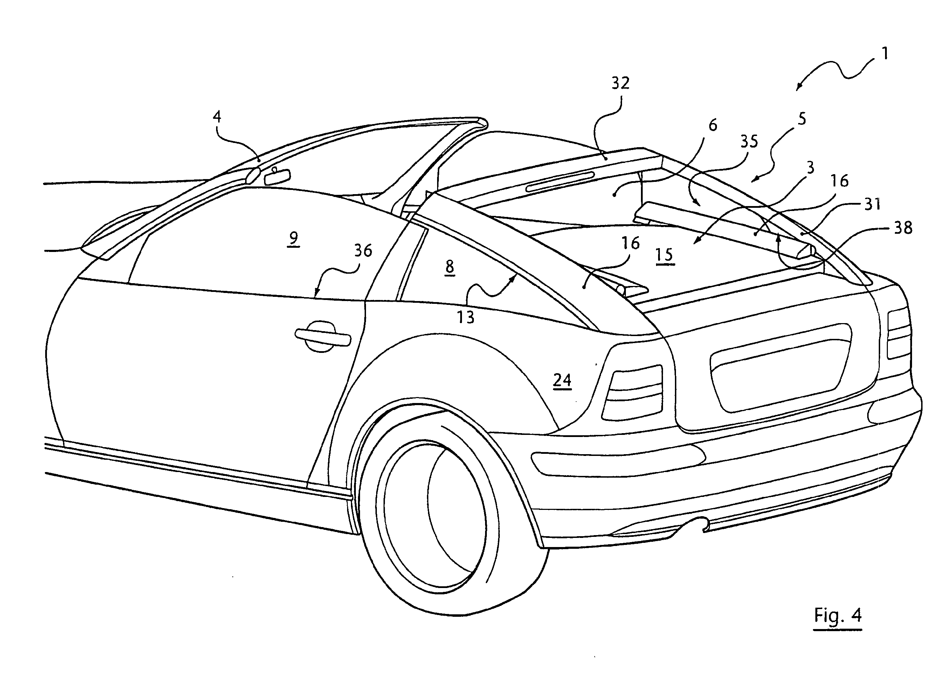

Hierzu weist der mittlere Bereich 15 des Dachteils 3 ein eigenständiges Gestänge 23 auf, an dem er gegenüber der Karosserie 24 beweglich gehalten ist. Es ist daher zum Öffnen oder Schließen des Dachteils 3 keine Verschiebung in seitlichen Führungsschienen erforderlich. Das Gestänge 23 ist zu den Seiten durch die Spitzen 7 des Finnendachs optisch abgedeckt. Seine Lenker 25a, 25b sind in Schlitzausnehmungen, die parallel zu den Finnen 7 liegen und sich im wesentlichen über deren gesamte Länge erstrecken, geführt (Fig. 3). Das Gestänge 23 kann durch ein beispielsweise elektrisches oder hydraulisches Antriebsorgan 26 bewegt werden. Dieses ist einenends karosseriefest gelagert und greift mit seinem freien Ende an einem Lenker 25a an. Dieser ist ebenfalls karosseriefest am Schwenkgelenk 27 gelagert und wirkt über zwei Zwischenhebel 28, 29, von denen letzterer am Gelenk 30 karosseriefest gelagert ist, auf den vorderen Lenker 25b ein. Damit ist ein Mehrgelenk gebildet, das eine zunächst im wesentlichen geradlinige Verlagerung des Dachteils 3 zu seiner Öffnung ermöglicht. Auch die Ablagestellung des geöffneten Dachteils 3 kann im wesentlichen horizontal zwischen den Finnen 7 liegen (Fig. 4), wobei die Außenbereiche 16 in der eingeschwenkten, den Dachteil 3 verschmälernden Stellung verbleiben.

Die Betätigung der Einschwenkbewegung der Außenbereiche 16 des Dachteils 3 kann ebenso wie dessen Gesamtbewegung zu seinem Öffnen oder Schließen vom Armaturenbrett aus fernsteuerbar sein. Beide Bewegungsabläufe können über eine Programmlogik miteinander verkoppelt sein, um Fehlbedienungen zu vermeiden.

Um das Öffnen des verschmälerten Dachteils 3 zu ermöglichen, kann, wie etwa in Fig. 3 gezeigt ist, ein Teil des hinteren Dachteils 5 aufschwenken. In diesem ersten Ausführungsbeispiel schwenken dabei seitliche, auf den Finnen 7 aufliegende Abdeckrahmenteile 31, die über ein mit aufschwenkendes Querrahmenteil 32 miteinander verbunden sind, um eine heckwärtige Achse 33 auf. Die Achse 33 muß nicht karosseriefest sein, sondern ist beispielsweise über einen Koppelhebel 34 und einen am Gelenk 40 karosseriefest gelagerten Zwischenhebel 39 mit dem Lenker 25b verbunden, so daß sie durch Einfahren des Antriebsorgans 16 von der Fensterbrüstungslinie 36 nach oben abhebt. Ein weiteres mit dem Lenker 25b verbundenes Koppelglied 37 ist vorgesehen, um die Rahmenteile 31 um die Achse 33 aufzuschwenken. In aufgeschwenkter Stellung sind dadurch die Schlitzausnehmungen für das Gestänge 23, die zwischen äußeren Scheiben 8 und zur Fahrzeuglängsmittelebene E hin weisenden Innenverkleidungen 35 der Finnen 7 angeordnet sind, frei zugänglich. Das Gestänge 23 kann sich in dieser Öffnungsstellung der Rahmenteile 31, 32 frei bewegen und damit den vorderen Dachteil 3 zwischen seiner verschmälerten geschlossenen und seiner geöffneten Stellung verlagern. Dadurch, daß die Innenverkleidungen 35 sich nicht bis zur hinteren Spitze der Finnen 7 erstrecken, sondern gegenüber diesen einen offenen Bereich 38 belassen, können über dem horizontal zwischen den Finnen 7 abgelegten vorderen Dachteil 3 die Rahmenteile 31, 32 wieder geschlossen werden (Fig. 4). Somit ist nach Fig. 4 ein Targa-Fahrzeug gebildet.

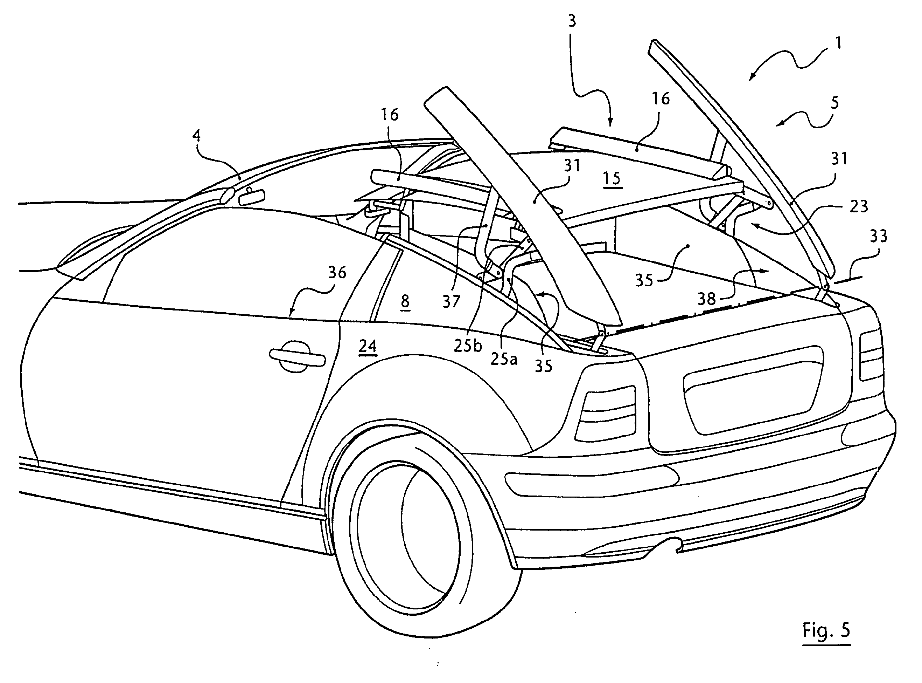

In Fig. 5 ist ein alternatives Ausführungsbeispiel dargestellt. Dort sind die seitlichen, längs erstreckten Rahmenteile 31 nicht über ein Querrahmenteil 32 miteinander verbunden. Die Öffnungskinematik für die Dachteile 3 und 5 ist ansonsten unverändert.

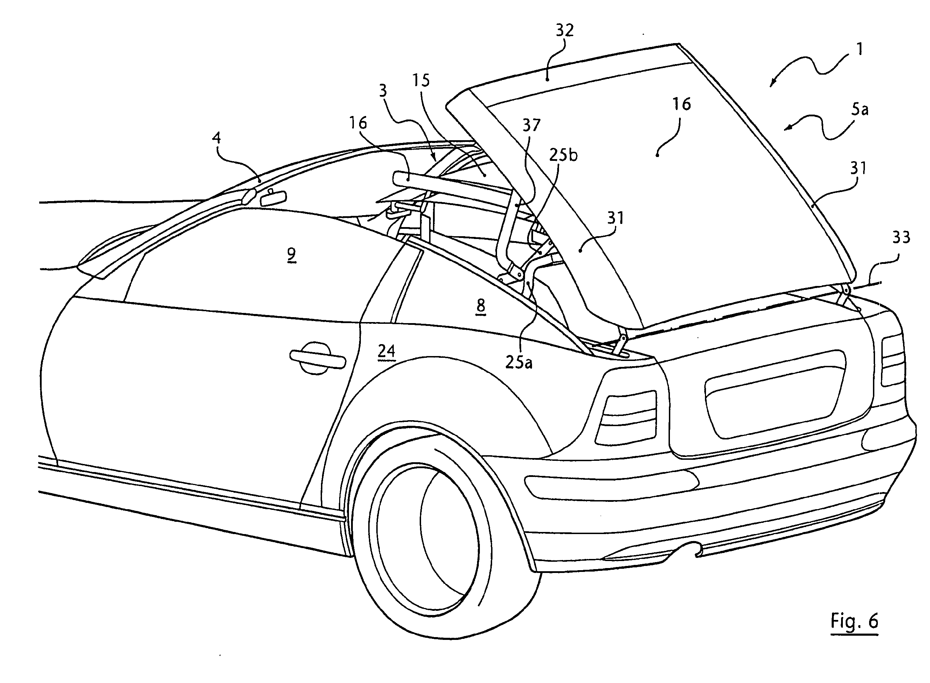

In Fig. 6 ist ein weiteres Alternativbeispiel dargestellt, wiederum in einer Öffnungsstellung ähnlich Fig. 3. Hier ist das Querrahmenteil 32 wieder vorhanden, zusätzlich ist zwischen den Rahmenteilen 31 eine schräg stehende Heckscheibe 6a anstelle der vertikalen Heckscheibe 6 angeordnet. In dieser Ausführung liegt damit kein Finnenverdeck im eigentlichen Sinne vor. Allerdings sind auch hier die seitlich längs erstreckten Spitzen 7 vorhanden. Bei über dem abgelegten Dachteil 3 geschlossenem hinterem Dachteil 5a liegt auch hier wiederum ein Targa-Fahrzeug vor.

Je nach Ausbildung des Fahrzeugs kann es auch möglich sein, daß der hintere Dachteil 5, 5a über dem abgelegten vorderen Dachteil 3 unter der Fensterbrüstungslinie 36 ablegbar ist und dann ein Voll-Cabriolet-Fahrzeug gebildet wird.

Es kann zudem im Bereich der B-Säulen und der Heckscheibe 6 ein Überrollschutz vorgesehen sein. Die Durchtrittsöffnung für den beweglichen Dachteil 3 liegt oberhalb des Überrollschutzes und ist dadurch von diesem nicht eingeschränkt.

## Patentansprüche

1. Kraftfahrzeug (1) mit einem Dach (2), das zumindest einen insgesamt zwischen einer Offen- und einer Schließstellung beweglichen Dachteil (3) aufweist, der sich in Schließstellung zwischen dem Nahbereich eines Windschutzscheibenrahmens (4) und einem hinteren, insbesondere starren Dachteil (5;5a) erstreckt, wobei der bewegliche Dachteil (3) in mehrere, zusammenhängende Bereiche (15;16) derart geteilt ist, daß er durch Verlagerung von Außenbereichen (16) zwischen einer verschmälerten und einer normalen Breite variierbar ist und in verschmälerter Breite zwischen seiner Offen- und seiner Schließstellung beweglich ist,
**dadurch gekennzeichnet,**
**daß** zur Verschmälerung des beweglichen Dachteils (3) die Außenbereiche (16) gleichzeitig angehoben werden, wobei der Mittelbereich (15) an einem Gestänge (23) selbständig beweglich gehalten und darüber zwischen der Offen- und der Schließstellung verlagerbar ist.

2. Kraftfahrzeug nach Anspruch 1,
**dadurch gekennzeichnet,**
**daß** der bewegliche Dachteil (3) in einen, bezogen auf eine vertikale Längsmittelebene (E), mittleren Bereich (15) und zwei Außenbereiche (16) geteilt ist.

3. Kraftfahrzeug (1) nach einem der Ansprüche 1 oder 2,
**dadurch gekennzeichnet,**
**daß** der bewegliche Dachteil (3) in normaler Breite die volle Quererstreckung zwischen Oberkanten von Seitenscheiben (9) des Kraftfahrzeugs (1) einnimmt und die Teilungsfugen (14) im Nahbereich der seitlichen Außenkanten des Dachteils (3) liegen.

4. Kraftfahrzeug nach Anspruch 3,
**dadurch gekennzeichnet,**
**daß** die Außenbereiche (16) seitliche Rahmenteile (10) bilden, die in Normalstellung einen Abschnitt seitlicher Dachrahmen (11) zwischen einem Windschutzscheibenrahmen (4) und einem hinteren Dachteil (5;5a) ausbilden.

5. Kraftfahrzeug nach Anspruch 4,
**dadurch gekennzeichnet,**
**daß** die Rahmenteile (10) in geschlossener Dachstellung an dem Windschutzscheibenrahmen (4) und/ oder dem hinteren Dachteil (5;5a) verriegelt ist und durch die Einwärtsverlagerung der Außenbereiche (16) die Verriegelung lösbar ist.

6. Kraftfahrzeug nach einem der Ansprüche 1 bis 5,
**dadurch gekennzeichnet,**
**daß** die bezogen auf eine vertikale Längsmittelebene (E) seitlich außen liegenden Außenbereiche (16) gegen den Mittelbereich (15) einschwenkbar sind.

7. Kraftfahrzeug nach Anspruch 6,
**dadurch gekennzeichnet,**
**daß** zum Verschwenken ein Mehrgelenk (17) vorgesehen ist.

8. Kraftfahrzeug nach einem der Ansprüche 1 bis 7,
**dadurch gekennzeichnet,**
**daß** dieses ein Targa-Fahrzeug ist.

9. Kraftfahrzeug nach einem der Ansprüche 1 bis 8,
**dadurch gekennzeichnet,**
**daß** der bewegliche Dachteil (3) in einer im wesentlichen horizontalen Offenstellung oberhalb eines heckseitigen, im wesentlichen horizontalen Karosseriebereichs, insbesondere einer Kofferraumhaube, ablegbar ist.

10. Kraftfahrzeug nach einem der Ansprüche 1 bis 9,
**dadurch gekennzeichnet,**
**daß** der hintere Dachteil (5;5a) zur Freigabe einer Durchtrittsöffnung für den beweglichen Dachteil (3) zumindest bereichsweise um eine heckwärtige Achse (33) aufschwenkbar und über dem geöffneten Dachteil (3) wieder zuschwenkbar ist.

11. Kraftfahrzeug nach einem der Ansprüche 1 bis 10,
**dadurch gekennzeichnet,**
**daß** der hintere Dachteil (5) finnenartig ausgebildet ist und zur Freigabe einer Durchtrittsöffnung für den beweglichen Dachteil (3) seitliche, auf den Finnen (7) aufliegende Abdeckrahmenteile (31) um eine heckwärtige Achse (33) aufschwenkbar und über dem geöffneten Dachteil (3) wieder zuschwenkbar sind.

12. Kraftfahrzeug nach Anspruch 11,
**dadurch gekennzeichnet,**
**daß** mit den seitlichen Rahmenteilen (31) des hinteren Dachteils (5) auch ein Querrahmenteil (32), das eine zwischen den Finnen (7) gelegene Heckscheibe (6) übergreift, mit aufschwenkbar ist.

13. Kraftfahrzeug nach einem der Ansprüche 10 bis 12,
**dadurch gekennzeichnet,**
**daß** die Bewegung der Rahmenteile (31;32) über eine Programmsteuerung mit der Verlagerungsbewegung der Außenbereiche (16) des vorderen Dachteils (3) verknüpft ist.

## Claims

1. A motor vehicle (1) with a roof (2) comprising at least one roof part (3) which is movable on the whole between an open and a closed position and, in the closed position, extends between the area near a windscreen frame (4) and a rear, in particular rigid, roof part (5;5a), said movable roof part (3) being divided into a plurality of contiguous areas (15;16) such that it is variable between a reduced width and a normal width by displacement of outer areas (16) and is movable between its open and its closed position when its width is reduced,
**characterised in that**,
in order to reduce the width of the movable roof part (3), the outer areas (16) are lifted at the same time, with the central area (15) being held by a linkage (23) in an independently movable manner and being displaceable via said linkage (23) between the open and closed positions.

2. The motor vehicle according to claim 1, **characterised in that** the movable roof part (3) is divided into an area (15), which is central with respect to a vertical median longitudinal plane (E), and two outer areas (16).

3. The motor vehicle (1) according to any one of claims 1 or 2, **characterised in that** the movable roof part (3), having its normal width, occupies the full transverse extent between upper edges of side windows (9) of the motor vehicle (1), and the partition joints (14) are disposed in the area near the lateral outer edges of the roof part (3).

4. The motor vehicle according to claim 3, **characterised in that** the outer areas (16) form lateral frame parts (10) which, in the normal position, form a portion of lateral roof frames (11) between a windscreen frame (4) and a rear roof part (5; 5a).

5. The motor vehicle according to claim 4, **characterised in that**, in the closed roof position, the frame parts (10) are latched onto the windscreen frame (4) and/or the rear roof part (5; 5a) and that said latch can be released by the inward movement of the outer areas (16).

6. The motor vehicle according to any one of claims 1 to 5, **characterised in that** the outer areas (16), which are located laterally outwardly with respect to a vertical median longitudinal plane (E), can be pivoted inwardly against the central area (15).

7. The motor vehicle according to claim 6, **characterised in that** a multiple joint (17) is provided for said pivoting.

8. The motor vehicle according to any one of claims 1 to 7, **characterised in that** it is a targa vehicle.

9. The motor vehicle according to any one of claims 1 to 8, **characterised in that** the movable roof part (3) can be stowed, in a substantially horizontal open position, above a rear, substantially horizontal area of the vehicle body, in particular a boot lid.

10. The motor vehicle according to any one of claims 1 to 9, **characterised in that** the rear roof part (5; 5a) can be swung open at least partially about a rear axis (33) to expose a passage opening for the movable roof part (3), and can be swung closed again above the opened roof part (3).

11. The motor vehicle according to any one of claims 1 to 10, **characterised in that** the rear roof part (5) has a fin-type shape and that lateral covering frame parts (31) resting on the fins (7) can be swung open about a rear axis (33) to expose a passage opening for the movable roof part (3) and can be swung closed again above the opened roof part (3).

12. The motor vehicle according to claim 11, **characterised in that** a transverse frame part (32), which extends over a rear window (6) disposed between the fins (7), can be swung open along with the lateral frame parts (31) of the rear roof part (5).

13. The motor vehicle according to any one of claims 10 to 12, **characterised in that** the movement of the frame parts (31; 32) is linked to the displacement of the outer areas (16) of the front roof part (3) via a program control.

## Revendications

1. Véhicule automobile (1) avec un toit (2) comprenant au moins un élément de toit (3) qui est déplaçable généralement entre une position ouverte et une position fermée et qui, en position fermée, s'étend entre la région proche d'un cadre de pare-brise (4) et un élément de toit arrière (5;5a), notamment rigide, ledit élément de toit déplaçable (3) étant divisé en plusieurs régions connexes (15;16) de manière à être variable entre une largeur réduite et une largeur normale par déplacement de régions extérieures (16) et étant déplaçable entre sa position ouverte et sa position fermée lorsque son largeur est réduite,
**caractérisé en ce que**,
pour réduire la largeur dudit élément de toit déplaçable (3), on lève en même temps les régions extérieures (16), la région centrale (15) étant supportée à déplacement indépendant par une tringlerie (23) et étant déplaçable par ladite tringlerie (23) entre la position ouverte et la position fermée.

2. Véhicule automobile selon la revendication 1, **caractérisé en ce que** l'élément de toit déplaçable (3) est divisé en une région (15) qui est centrale par rapport à un plan longitudinal médian vertical (E), et en deux régions extérieures (16).

3. Véhicule automobile (1) selon l'une quelconque des revendications 1 ou 2, **caractérisé en ce que** l'élément de toit déplaçable (3), présentant sa largeur normale, occupe toute l'étendue transversale entre des bords supérieurs de fenêtres latérales (9) du véhicule automobile (1) et les joints de séparation (14) sont disposés dans la région proche des bords latéraux extérieurs de l'élément de toit (3).

4. Véhicule automobile selon la revendication 3, **caractérisé en ce que** les régions extérieures (16) constituent des éléments de cadre latéraux (10) qui, en position normale, constituent un segment de cadres latéraux de toit (11) entre un cadre de pare-brise (4) et un élément de toit arrière (5; 5a).

5. Véhicule automobile selon la revendication 4, **caractérisé en ce que**, dans la position fermée du toit, les éléments de cadre (10) sont verrouillés sur le cadre de pare-brise (4) et/ou sur l'élément de toit arrière (5; 5a) et **en ce que** le verrou peut être libéré par le déplacement des régions extérieures (16) vers l'intérieur.

6. Véhicule automobile selon l'une quelconque des revendications 1 à 5, **caractérisé en ce que** les régions extérieures (16), qui sont disposées latéralement à l'extérieur par rapport à un plan longitudinal médian vertical (E), peuvent pivoter vers l'intérieur contre la région centrale (15).

7. Véhicule automobile selon la revendication 6, **caractérisé en ce que** l'on prévoit un joint multiple (17) pour ledit pivotement.

8. Véhicule automobile selon l'une quelconque des revendications 1 à 7, **caractérisé en ce qu'**il s'agit d'un véhicule targa.

9. Véhicule automobile selon l'une quelconque des revendications 1 à 8, **caractérisé en ce que** l'élément de toit déplaçable (3) est déposable, dans une position ouverte sensiblement horizontale, au-dessus d'une région de carrosserie arrière, sensiblement horizontale, notamment un couvercle de coffre.

10. Véhicule automobile selon l'une quelconque des revendications 1 à 9, **caractérisé en ce que** l'élément de toit arrière (5; 5a) peut être ouvert par pivotement au moins partiellement autour d'un axe arrière (33) pour exposer une ouverture de passage pour l'élément de toit déplaçable (3) et peut être refermé par pivotement au-dessus de l'élément de toit déplaçable (3).

11. Véhicule automobile selon l'une quelconque des revendications 1 à 10, **caractérisé en ce que** l'élément de toit arrière (5) est réalisé sous forme d'ailerons et **en ce que** des éléments de cadre de couverture latéraux (31) qui restent surs les ailerons (7) peuvent être ouverts par pivotement autour d'un axe arrière (33) pour exposer une ouverture de passage pour l'élément de toit déplaçable (3) et peuvent être refermés par pivotement au-dessus de l'élément de toit déplaçable (3).

12. Véhicule automobile selon la revendication 11, **caractérisé en ce qu'**un élément de cadre transversal (32), s'étendant au-dessus d'une lunette arrière (6) disposée entre les ailerons (7), peut être ouvert par pivotement ensemble avec les éléments de cadre latéraux (31) de l'élément de toit arrière (5).

13. Véhicule automobile selon l'une quelconque des revendications 10 à 12, **caractérisé en ce que** le déplacement des éléments de cadre (31; 32) est associé au déplacement des régions extérieures (16) de l'élément de toit avant (3) par une commande programmée.
